# EUROPÄISCHE PATENTANMELDUNG

(11) **EP 2 309 255 A1**
(43) Veröffentlichungstag der Anmeldung: **13.04.2011**
(21) Anmeldenummer: 09172287.6
(22) Anmeldetag: 06.10.2009
(51) Int. Cl.: G01N 21/86, G01N 33/487

(54) **Testelement und Testsystem**

(71) Anmelder: F. Hoffmann-La Roche AG, 4070 Basel (CH); Roche Diagnostics GmbH, 68305 Mannheim (DE)
(72) Erfinder: Haar, Hans-Peter Dr., 69168 Wiesloch (DE); Serr, Markus Dr., 67346 Speyer (DE)
(74) Vertreter: Pfiz, Thomas

(57) **Zusammenfassung**

Die Erfindung betrifft ein Testelement zum Einmalgebrauch in einem Testgerät mit einem Trägerstreifen (12), einem an einer Flachseite (14) des Trägerstreifens (12) aufgebrachten und von seiner freien Oberseite her mit Körperflüssigkeit beaufschlagbaren analytischen Testfeld (16) sowie mindestens einem zwischen einem Anschlussende (22) des Trägerstreifens (12) und der Unterseite des Testfelds (16) verlaufenden Lichtleiter (18) zur reflexionsphotometrischen Untersuchung des Testfelds (16). Hierbei wird vorgeschlagen, dass der Lichtleiter (18) in einem Aufnahmekanal (24) des Trägerstreifens (12) angeordnet ist, und dass der Trägerstreifen (12) eine zum Umlenken von Messlicht zwischen dem Lichtleiter (18) und dem Testfeld (16) ausgebildete Lichtumlenkstruktur (20) aufweist.

## Beschreibung

Die Erfindung betrifft ein Testelement zum Einmalgebrauch in einem Testgerät mit einem Trägerstreifen, einem an einer Flachseite des Trägerstreifens aufgebrachten und von seiner freien Oberseite her mit Körperflüssigkeit beaufschlagbaren analytischen Testfeld sowie mindestens einem zwischen einem Anschlussende des Trägerstreifens und der Unterseite des Testfelds verlaufenden Lichtleiter zur reflexionsphotometrischen Untersuchung des Testfelds. Die Erfindung betrifft weiter ein Herstellungsverfahren und ein Testsystem zur Verarbeitung derartiger Testelemente.

Bei Teststreifen für Blutglukosebestimmungen wurden bereits verschiedene Applikationsformen für den Probenauftrag relativ zu der flach-rechteckförmigen Streifengeometrie realisiert, speziell auch so genanntes "Top dosing", d.h. Blutauftrag von oben auf das flachseitig (zwischen den Längskanten) aufgebrachte Testfeld. Top dosing kommt den ergonomischen Anforderungen entgegen und ist komfortabler, vor allem im Hinblick auf eine im Zusammenhang mit Diabetes häufig vorhandene Sehschwäche von Patienten. Bei einem am Markt bekannten System wird der Teststreifen jedoch inmitten einer Gehäusewanne und damit innerhalb der Gerätekontur bereitgehalten. Durch ungenaues Applizieren bzw. zu große Probenmengen kann die Wanne des Teststreifenhalters verunreinigt werden. Hingegen wird beim so genannten Outside-Dosing der Streifen entnommen, außerhalb des Gerätes Probe aufgetragen und der Streifen dann zurück ins Gerät gesteckt. Wie oben genannt kann es dabei zur Verschmutzung von Oberflächen kommen, da die komplette Streifenfläche zur Applikation nutzbar ist. Zusätzlich kann aber auch eine ungewollte Verschmutzung der Streifenunterseite auftreten, beispielsweise wenn der Streifen für die Probenapplikation auf einer verschmutzten Oberfläche abgelegt wird. Derartige Verschmutzungen können eine Fehlmessung zur Folge haben.

Bei solchen Teststreifen erfolgt die Vermessung des Testfelds üblicherweise durch ein Loch in der Trägerfolie mittels in Reflexion gemessener Absorptionsphotometrie. Zur optischen Ankopplung an eine Messeinrichtung wurden auch schon mehrschichtige Trägerstreifen mit einer Lichtleitschicht vorgeschlagen, so dass die Messgenauigkeit und Handhabung verbessert wird. Derartige Konzepte müssen aber auch für die Prozessbedingungen einer Massenfertigung geeignet sein.

Ausgehend hiervon liegt der Erfindung die Aufgabe zugrunde, die im Stand der Technik bekannten Testelemente und Verfahren zu deren Herstellung sowie Systeme zu deren Einsatz weiter zu verbessern und insbesondere auch eine für die Massenherstellung von Verbrauchsmitteln günstigen Aufbau und Prozessablauf bei gleichzeitig ergonomischer und hygienischer Handhabung in einem Testsystem anzugeben.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, in einen Topdosing-Teststreifen diskrete Lichtleiter zu integrieren. Dementsprechend wird erfindungsgemäß vorgeschlagen, dass der Lichtleiter in einem Aufnahmekanal des Trägerstreifens angeordnet ist, und dass der Trägerstreifen eine zum Umlenken von Messlicht zwischen dem Lichtleiter und dem Testfeld ausgebildete Lichtumlenkstruktur aufweist. Diese einfache und toleranzunempfindliche Konstruktion erlaubt es, Streifen, Lichtleiter und Testfelder als Zuschnitt aus Endlosmaterial reproduzierbar miteinander zu kombinieren, ohne dass aufwändige bzw. kostenintensive Herstellungsschritte erforderlich wären. Durch die spezielle Lichtleiterintegration kann der Ort der Probenapplikation von der Geräteschnittstelle im Abstand gehalten werden, so dass Verschmutzungsprobleme verringert werden.

Vorteilhafterweise verläuft die Achse des faseroptischen Lichtleiters bzw. der Lichtleiter parallel zu der von dem Testfeld aufgespannten Ebene, während die Lichtumlenkstruktur das Messlicht zwischen der zugewandten Lichtleiter-Stirnfläche und der Unterseite des Testfelds winklig umlenkt. Auf diese Weise ist keine komplizierte Bearbeitung des in der Regel spröden Lichtleitermaterials erforderlich.

Eine weitere herstellungstechnisch vorteilhafte Ausgestaltung sieht vor, dass der Lichtleiter in einem Hohlraum des Trägerstreifens endet, und dass der Hohlraum zumindest bereichsweise durch die Lichtumlenkstruktur begrenzt ist. Hierbei kann die Lichtumlenkstruktur durch eine in dem Trägerstreifen außerhalb des Lichtleiters ausgebildete Reflektorfläche gebildet sein. Diese lässt sich auf einfache Weise durch eine das Messlicht diffus streuende Oberfläche realisieren oder als Spiegel für eine spiegelnde Reflexion des Messlichts ausbilden.

Eine Umlenkschräge bezüglich der Lichtleiterachse lässt sich vorteilhaft dadurch verwirklichen, dass die Reflektorfläche eine Planfläche aufweist oder zumindest bereichsweise zur Erzeugung eines fokussierten oder divergenten Messlichtbündels gekrümmt ist.

Der Trägerstreifen kann rechteckförmig sein oder zur erhöhten Anwenderfreundlichkeit im Bereich des Testfelds breiter als an seinem Anschlussende sein. Vorteilhaftist es auch, wenn der Trägerstreifen einen das Testfeld seitlich begrenzenden, gegebenenfalls zu dem Testfeld hin geneigten hydrophoben Randstreifen aufweist, so dass die Probe zielsicher auf das Testfeld gelangt.

Zur Vereinfachung der Fertigung ist es von Vorteil, wenn der Aufnahmekanal als Schnittkanal insbesondere durch Laserschneiden oder als Eindrückkanal insbesondere durch ein mechanisches Prägewerkzeug in den Trägerstreifen eingebracht ist.

Für eine besonders präzise Auslegung ist es günstig, wenn der Lichtleiter durch ein *in situ* in dem Trägerstreifen strukturiertes lichtleitendes Material gebildet ist.

Eine weitere Verbesserung auch hinsichtlich einer Unterdosiererkennung lässt sich dadurch erreichen, dass mehrere Lichtleiter in jeweils einem Aufnahmekanal optisch getrennt voneinander in dem Trägerstreifen verlaufen. Die Lichtleiter können dabei unterschiedlichen Durchmesser aufweisen, um die Umlenkbereiche mechanisch besser voneinander abzutrennen. Hier ist es günstig, wenn der mittlere Lichtleiter einen kleineren Durchmesser besitzt. Denkbar ist auch die Verwendung von mehreren hintereinander angebrachten Messfeldern zur gleichzeitigen Bestimmung mehrerer Parameter.

In verfahrensmäßiger Hinsicht wird die eingangs genannte Aufgabe dadurch gelöst, dass ein Trägerstreifen mit mindestens einem Aufnahmekanal für einen Lichtleiter versehen wird und anschließend der Lichtleiter in den Aufnahmekanal eingesetzt oder darin gebildet wird.

Ein weiterer Erfindungsaspekt betriff eine Testsystem insbesondere für Blutzuckertests mit einem Handgerät umfassend eine in einem Gehäuse angeordnete Messeinrichtung und einem darin als Einwegartikel eingesetzten Testelement, das einen Trägerstreifen und mindestens ein flachseitig darauf aufgebrachtes und an seiner freien Oberseite mit Körperflüssigkeit beaufschlagbares analytisches Testfeld aufweist, wobei der Trägerstreifen an seiner von dem Testfeld abgewandten Unterseite durch eine in einer Stützstellung aus dem Gehäuse herausragende geräteseitige Stützvorrichtung beim Auftragen von Körperflüssigkeit abgestützt ist. Da beim Topdosing eine Kraft senkrecht zur Streifenlängsachse wirkt, dann durch die Stützvorrichtung ein Verbiegen des Streifens und insbesondere der integrierten Lichtleiter verhindert werden, wobei durch das gehäuseexterne Widerlager eine Kontamination von Gehäusewänden verhindert wird. Dabei lässt sich durch eine Lichtleiteranordnung eine photometrische Auswertung auch in der Stützstellung realisieren.

Vorteilhafterweise überdeckt der Trägerstreifen die vorzugsweise durch einen biegesteifen auskragenden Arm gebildete Stützvorrichtung zumindest in dem das Testfeld enthaltenden Endabschnitt vollflächig, so dass das Risiko einer Verschmutzung weiter minimiert wird.

Um die Gerätehandhabung weiter zu verbessern, ist es vorteilhaft, wenn die Stützvorrichtung gegebenenfalls zusammen mit dem Testelement aus dem Gehäuse ausfahrbar und wieder einziehbar ist. Hierfür kann die Stützvorrichtung durch einen mechanischen oder elektromotorischen Antrieb zwischen einer innerhalb des Gehäuses befindlichen Ruhestellung und der Stützstellung hin und her bewegbar sein.

Eine weitere Verbesserung hinsichtlich der Verarbeitung eines disposiblen Testelements ergibt sich dadurch, dass der Trägerstreifen an seinem Anschlussende durch eine optische Steckverbindung mit der Messeinrichtung koppelbar ist.

Im Folgenden wird die Erfindung anhand der in der Zeichnung schematisch dargestellten Ausführungsbeispiele näher erläutert. Es zeigen
- Fig. 1: ein mit Lichtleitern versehener Teststreifen zum Probenauftrag von oben auf ein Testfeld in einer perspektivischen Ansicht;
- Fig. 2: den testfeldseitigen Endabschnitt des Teststreifens in einer Fig. 1 entsprechenden Darstellung;
- Fig. 3: eine Lichtumlenkstruktur zum Umlenken von Messlicht zwischen den Lichtleiterenden und dem Testfeld in ausschnittsweiser Vergrößerung der Fig. 2;
- Fig. 4: eine weitere Ausführungsform einer Lichtumlenkstruktur in Fig. 3 entsprechender Darstellung;
- Fig. 5: eine schaubildliche Darstellung eines Testsystems zur Verarbeitung der von oben dosierbaren Teststreifen;
- Fig. 6 und 7: das Testsystem bei ausgefahrener Stützvorrichtung und mit darauf abgestütztem Teststreifen in Fig. 5 entsprechender Darstellung.

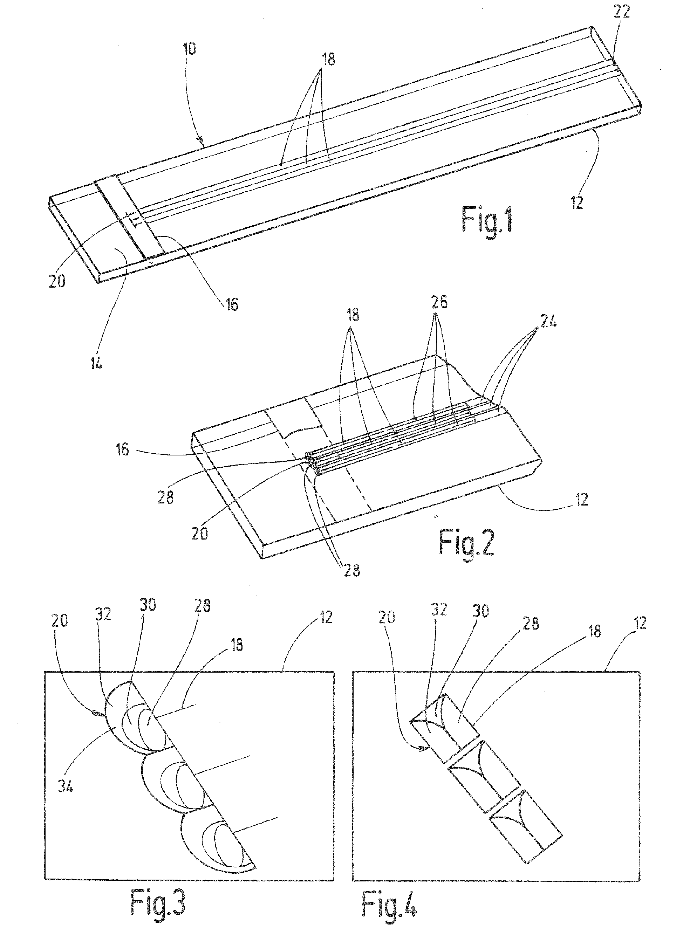

Das in Fig. 1 dargestellte streifenförmige Testelement 10 (Teststreifen) dient als Einwegartikel zur Glukoseanalyse einer Blutprobe mittels einer photometrischen Messeinrichtung. Hierfür weist das Testelement 10 einen rechteckförmig-flachen Trägerstreifen 12 aus Kunststofffolie, ein an der oberen Flachseite 14 des Trägerstreifens aufgebrachtes analytisches Testfeld 16 zum Probenauftrag von oben sowie drei nebeneinander verlaufende Lichtleiter 18 auf, die an ihrem einen Ende unterhalb des Testfelds 16 auf eine Lichtumlenkstruktur 20 ausgerichtet sind.

Das gegebenenfalls mehrlagige Testfeld 16 enthält ein trockenchemisches Reagenzsystem, das mit einem Analyten (Glukose) unter Farbänderung reagiert. Zur Durchführung einer Analyse wird ein Bluttropfen z.B. aus der Fingerkuppe auf die von dem Trägerstreifen 12 abgewandte freie Oberseite des Testfelds 16 aufgebracht. Diese kann zur flächigen Probenausbreitung eine Spreitschicht aufweisen.

Zur reflexionsphotometrischen Auswertung wird dann auf die Unterseite des Testfelds 16 Licht eingestrahlt und die (diffus) reflektierte Lichtintensität erfasst. Der Strahlengang des Messlichts verläuft dabei von dem Anschlussende 22 des Trägerstreifens 12 bis unter das Testfeld 16 über die Lichtleiter 18 getrennt, um ein optisches Übersprechen zu vermeiden. Beispielsweise kann das Licht über den mittleren Lichtleiter eingestrahlt werden, während das von dem Testfeld 16 aus voneinander beabstandeten Messzonen zurückgeworfene Licht über die beiden äußeren Lichtleiter ausgekoppelt wird, so dass auch eine Dosierkontrolle hinsichtlich einer hinreichend großen Ausdehnung des Probenflecks möglich ist.

Wie aus Fig. 2 ersichtlich, sind die dort nur abschnittsweise gezeigten Lichtleiter 18 in jeweils einem Aufnahmekanal 24 des Trägerstreifens 12 getrennt voneinander angeordnet. Die Aufnahmekanäle können zweckmäßig durch Laserschneiden oder mechanisches Eindrücken (Prägen) rillenförmig in das Substrat eingebracht werden. Die Lichtleiter 18 werden dann als vorgefertigte Fasern eingesetzt oder *in situ* in den Ausnehmungen gebildet. Letzteres kann dadurch erfolgen, dass formlose Kunststoffmasse durch Rakeln oder ähnliche Prozesse eingebracht und anschließend beispielsweise durch UV-Licht polymerisiert wird. Der Brechungsindex wird dabei so an das Trägermaterial angepasst, dass eine lichtleitende Struktur entsteht. Alternativ ist eine In-situ-Fertigung auch durch einen photolithographischen Produktionsprozess möglich, bei dem in einem mehrschichtigen Trägerstreifen durch photolithographische Strukturierung einer Zwischenschicht lineare Wellenleiterkerne gebildet und anschließend durch Überrakeln und Laminieren eingeschlossen werden.

Die Achse 26 der Lichtleiter 18 verläuft parallel zu der von dem Testfeld 16 aufgespannten Ebene. In dieser Geometrie bewirkt die Lichtumlenkstruktur 20 einen winkligen Strahlengang des Messlichts zwischen der der Struktur zugewandten Stirnfläche 28 des jeweiligen Lichtleiters 18 und der Unterseite des Testfelds 16.

Fig. 3 zeigt einen vergrößerten Ausschnitt des Trägerstreifens 12 unterhalb des Testfelds 16 im Bereich der Lichtumlenkstruktur 20. Die Lichtleiter 18 enden mit ihren Stirnflächen 28 in einem Hohlraum 30. Dieser ist durch eine Reflektorfläche 32 begrenzt, die als Lichtumlenkstruktur 20 wirkt. Die Reflektorfläche 32 ist als eine das einfallende Licht diffus reflektierende Streuschicht 34 bevorzugt durch das Trägerstreifenmaterial selbst oder gegebenenfalls durch eine Beschichtung gebildet und kalottenförmig konkav gekrümmt. Denkbar sind auch andere Flächenformen zur Erzeugung eines konvergierenden oder divergierenden Lichtbündels, beispielsweise sphäroidische oder parabolische Reflektorflächen.

Fig. 4 zeigt ein Ausführungsbeispiel einer Umlenkstruktur 20, bei dem die Reflektorfläche 32 durch einen Planspiegel für eine spiegelnde Reflexion gebildet ist. Auch hier kann Messlicht über den mittleren Lichtleiter eingestrahlt und das an dem Testfeld 16 aus unterschiedlichen Messzonen diffus nach unten gestreute Licht mit den äußeren Lichtleitern empfangen werden.

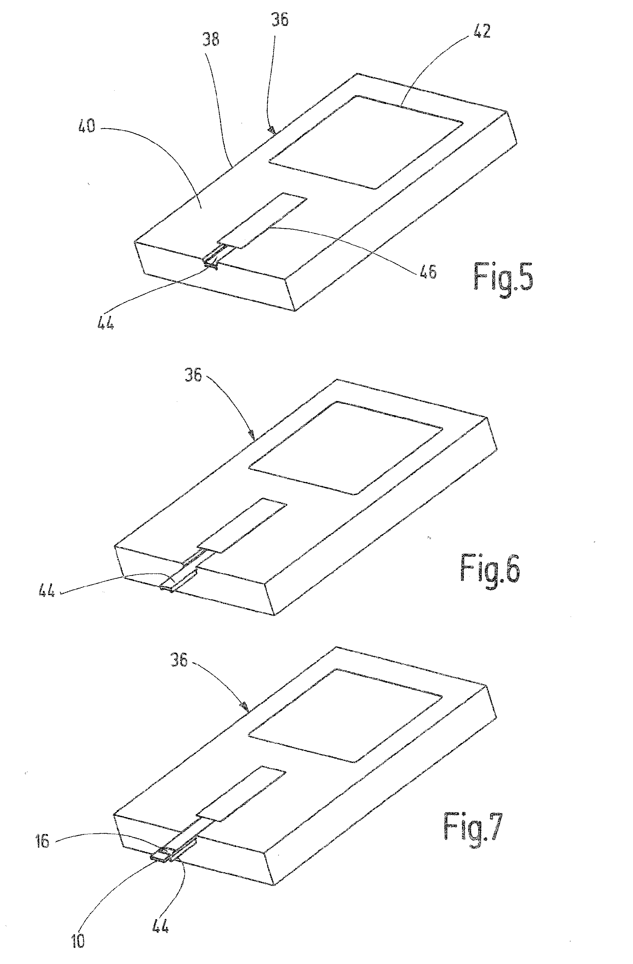

Fig. 5 zeigt eine Prinzipdarstellung eines Testsystems 36 zur Verarbeitung der vorstehend beschriebenen Teststreifen 10. Das System umfasst ein Handgerät 38 mit einem Gehäuse 40 und einer darin angeordneten, nicht gezeigten photometrischen Messeinrichtung. Diese kann Leuchtdioden als Lichtsender und Photodioden als Lichtempfänger aufweisen und durch eine optische Steckverbindung mit den Lichtleitern 18 der gegebenenfalls in dem Gehäuse 40 aus einem Magazin zum Einsatz bringbaren Teststreifen 10 gekoppelt werden. Das Messergebnis kann auf einem Display 42 dem Benutzer angezeigt werden.

Um den Teststreifen 10 beim Probenauftrag außerhalb des Gehäuses 40 zu unterstützen, ist eine Stützvorrichtung 44 in Form eines biegesteifen Tragarms vorgesehen. Die Stützvorrichtung 44 befindet sich in einer Ruhestellung innerhalb des Gehäuses 40 (Fig. 5) und in einer Stützstellung außerhalb davon (Fig. 5, 6). In der Stützstellung steht der Tragarm freitragend aus der Außenkontur des Gehäuses bzw. einer Gehäusewand heraus, so dass in diesem Bereich eine Probenapplikation auf das Testfeld 16 möglich ist, ohne dass das Gehäuse 40 kontaminiert wird. Zweckmäßig besteht der Tragarm als langgestrecktes Bauteil aus Metall, Kunststoff oder einem Verbundmaterial. Hierbei ist es auch vorteilhaft, wenn der Tragarm schmaler als der Teststreifen 10 ist und somit vollflächig überdeckt wird. Ein automatisches Hin- und Herbewegen des Metallstegs 44 zwischen der Ruhe- und Stützstellung kann durch eine mechanische oder elektromotorische Antriebsvorrichtung 46 bewerkstelligt werden. Zweckmäßig wird dabei zugleich der jeweils bereitzustellende Teststreifen 10 mitbewegt.

## Patentansprüche

1. Testelement zum Einmalgebrauch in einem Testgerät mit einem Trägerstreifen (12), einem an einer Flachseite (14) des Trägerstreifens (12) aufgebrachten und von seiner freien Oberseite her mit Körperflüssigkeit beaufschlagbaren analytischen Testfeld (16) sowie mindestens einem zwischen einem Anschlussende (22) des Trägerstreifens (12) und der Unterseite des Testfelds (16) verlaufenden Lichtleiter (18) zur reflexionsphotometrischen Untersuchung des Testfelds (16), **dadurch gekennzeichnet, dass** der Lichtleiter (18) in einem Aufnahmekanal (24) des Trägerstreifens (12) angeordnet ist, und dass der Trägerstreifen (12) eine zum Umlenken von Messlicht zwischen dem Lichtleiter (18) und dem Testfeld (16) ausgebildete Lichtumlenkstruktur (20) aufweist.

2. Testelement nach Anspruch 1, **dadurch gekennzeichnet, dass** die Achse (26) des faseroptischen Lichtleiters (18) parallel zu der von dem Testfeld (16) aufgespannten Ebene verläuft, und dass die Lichtumlenkstruktur (20) das Messlicht zwischen der zugewandten Stirnfläche (28) des Lichtleiters (18) und der Unterseite des Testfelds (16) winklig umlenkt.

3. Testelement nach Anspruch 1 oder 2, **dadurch gekennzeichnet, dass** der Lichtleiter (18) in einem Hohlraum (30) des Trägerstreifens (12) endet, und dass der Hohlraum (30) zumindest bereichsweise durch die Lichtumlenkstruktur (20) begrenzt ist.

4. Testelement nach einem der Ansprüche 1 bis 3, **dadurch gekennzeichnet, dass** die Lichtumlenkstruktur (20) durch eine in dem Trägerstreifen (12) außerhalb des Lichtleiters (18) ausgebildete Reflektorfläche (32) gebildet ist.

5. Testelement nach Anspruch 4, **dadurch gekennzeichnet, dass** die Reflektorfläche (32) eine Planfläche aufweist oder zumindest bereichsweise zur Erzeugung eines fokussierten oder divergenten Messlichtbündels gekrümmt ist.

6. Testelement nach einem der Ansprüche 1 bis 5, **dadurch gekennzeichnet, dass** der Trägerstreifen (12) einen das Testfeld (16) seitlich begrenzenden, gegebenenfalls zu dem Testfeld (16) hin geneigten hydrophoben Randstreifen aufweist.

7. Testelement nach einem der Ansprüche 1 bis 6, **dadurch gekennzeichnet, dass** der Aufnahmekanal (24) als Schnittkanal insbesondere durch Laserschneiden oder als Eindrückkanal insbesondere durch ein mechanisches Prägewerkzeug in den Trägerstreifen (12) eingebracht ist.

8. Testelement nach einem der Ansprüche 1 bis 7, **dadurch gekennzeichnet, dass** der Lichtleiter (18) durch ein in situ in dem Trägerstreifen (12) strukturiertes lichtleitendes Material gebildet ist.

9. Testelement nach einem der Ansprüche 1 bis 8, **dadurch gekennzeichnet, dass** mehrere Lichtleiter (18) in jeweils einem Aufnahmekanal (24) optisch getrennt voneinander in dem Trägerstreifen (12) verlaufen.

10. Verfahren zur Herstellung eines Testelements (10) nach einem der vorhergehenden Ansprüche, bei welchem ein Trägerstreifen (12) mit mindestens einem Aufnahmekanal (24) für einen Lichtleiter (18) versehen wird und anschließend der Lichtleiter (18) in den Aufnahmekanal (24) eingesetzt oder darin gebildet wird.

11. Testsystem insbesondere für Blutzuckertests mit einem Handgerät (38) umfassend eine in einem Gehäuse (40) angeordnete Messeinrichtung und einem darin als Einwegartikel eingesetzten Testelement (10) insbesondere nach einem der vorhergehenden Ansprüche, wobei das Testelement (10) einen Trägerstreifen (12) und mindestens ein flachseitig darauf aufgebrachtes und an seiner freien Oberseite mit Körperflüssigkeit beaufschlagbares analytisches Testfeld (16) aufweist, **dadurch gekennzeichnet, dass** der Trägerstreifen (12) an seiner von dem Testfeld (16) abgewandten Unterseite durch eine in einer Stützstellung aus dem Gehäuse (40) herausragende Stützvorrichtung (44) beim Auftragen von Körperflüssigkeit abgestützt ist.

12. Testsystem nach Anspruch 11, **dadurch gekennzeichnet, dass** der Trägerstreifen (12) die vorzugsweise durch einen biegesteifen Arm gebildete Stützvorrichtung (44) zumindest in dem das Testfeld (16) enthaltenden Endabschnitt vollflächig überdeckt.

13. Testsystem nach Anspruch 11 oder 12, **dadurch gekennzeichnet, dass** die Stützvorrichtung (44) gegebenenfalls zusammen mit dem Testelement (10) aus dem Gehäuse (40) ausfahrbar und wieder einziehbar ist.

14. Testsystem nach einem der Ansprüche 11 bis 13, **dadurch gekennzeichnet, dass** die Stützvorrichtung (44) durch einen mechanischen oder elektromotorischen Antrieb (46) zwischen einer innerhalb des Gehäuses (40) befindlichen Ruhestellung und der Stützstellung hin und her bewegbar ist.

15. Testsystem nach einem der Ansprüche 11 bis 14, **dadurch gekennzeichnet, dass** der Trägerstreifen (12) durch eine optische Steckverbindung mit der Messeinrichtung koppelbar ist.
